# EUROPEAN PATENT SPECIFICATION

(11) **EP 1 765 093 B1**
(45) Date of publication and mention of the grant of the patent: **02.04.2008**
(21) Application number: 05742293.3
(22) Date of filing: 04.05.2005
(51) Int. Cl.: A23L 1/308, A23L 1/0524

(54) **VEGETABLE FAT REPLACEMENT IN MEAT PRODUCTS**
VEGETABILER FETTERSATZ IN FLEISCHPRODUKTEN
GRAISSES VEGETALES DE SUBSTITUTION POUR PRODUITS CARNES

(30) Priority: 07.05.2004 SE 0401192; 04.03.2005 SE 0500512
(43) Date of publication of application: 28.03.2007
(73) Proprietor: Forskarpatent i Syd AB, 223 70 Lund (SE)
(72) Inventor: TORNBERG, Eva, S-227 31 Lund (SE); SJÖHOLM, Ingegerd, S-223 59 Lund (SE)
(74) Representative: Valea AB
(86) International application number: PCT/SE2005/000661
(87) International publication number: WO 2005/107500

(56) References cited:
- EP-A1- 1 206 909
- WO-A1-00/40098
- US-A- 5 654 028
- US-A1- 2003 157 230
- US-B1- 6 485 775
- US-B2- 6 528 085

## Description

### FIELD OF INVENTION

The present invention relates to a process for the preparation of vegetable fibers to be used as a fat replacement. In a particular aspect of the invention the processed vegetable fibers is used as a fat replacement in a low-fat meat product.

### BACKGROUND OF THE INVENTION

There is an increasing consumer demand on the market for low-fat meat products. This demand is supported by the increasing evidence that high intake of animal fat and especially fat with a high proportion of saturated fatty acids, is associated with increased risk of obesity, various types of cancer, high blood cholesterol and coronary heart diseases. For these reasons, several health related organizations (World Health Organization, American Heart Association, and American Cancer Association) have proposed to limit total fat intake to no more than 30% of total calories. At present health-conscious consumers try to reduce dietary fat intake by consuming low-fat, reduced fat or fat free foods, as fat constitutes the most concentrated source of energy in the diet.

However, a reduction of fat in meat products presents a number of difficulties in terms of appearance, flavor and texture as fat has a considerable desirable influence on these properties. From a nutritional point of view fat is a source of vitamins and essential fatty acids. Fat also modifies the perception of flavor compounds by influencing the balance, intensity, and release of flavors and by affecting their distribution and migration. In terms of texture, fat exerts a considerable influence on the binding, rheological and structural properties of meat products and it plays an important role in the formation of meat emulsions in processed products. Meat products having a reduced fat content tend to become dry and less succulent and are perceived by the consumer as less palatable.

Manufacturers have introduced several modifications to compensate for the unfavorable effects of reducing the levels of fat. These modifications include the selection of meat ingredients, an adaptation or preparation of common food technologies to vary the composition of the final product or to introduce certain functional characteristics and, finally, the use of non-meat ingredients that can help convey a desirable texture and, most importantly, enhance the water-holding capability in the product.

An emulsion sausage, a widely used food product, is an easy and economical way to obtain a high-value commodity from meat remnants. A typical energy value of a regular all-beef or a beef and pork-blend emulsion sausage is in the range of 320±325 kcal/100g. Current formulations of frankfurters which have fat contents of up to 30%, need to be altered to obtain products with a more favorable nutritional value, still keeping its texture as acceptable as the current one, by using different fat substitutes.

Several non-meat products have been used as fat replacements. Hydrocolloids with their unique characteristics in building texture, stability and emulsions are of great interest in low-fat processed meat production due to their ability to bind water and form gels. Alginate, carragenans, xanthan gum, locust bean gum, cellulose derivatives, starches and pectins are some examples of hydrocolloids that have been studied in low-fat meat products.

The use of dietary fiber- and starch-rich vegetable ingredients in the form of cooked vegetables is widely known. There is a tradition of adding a small amount of boiled potato to homemade products such as meatballs, liver pâtés, sausages or other minced meat mixtures having a high fat content. The purpose of such addition is to improve the absorption of fat and added water but also to reduce the evaporation of water during the cooking procedure.

Carbohydrates and fibers have been successful in improving cooking yield, reducing formulation costs and enhancing texture. US pat no. 5,654,028 discloses a low calorie meat product comprising a mixture of comminuted essentially fat free meat and a vegetable fat replacement ingredient comprising dietary fiber and starch still giving a meat product having the same taste consistency/texture and appearance as similar types of meat products prepared from meat having a high fat content. Essentially all fat is mechanically removed from the meat and is replaced by a dietary-fiber and starch containing ingredient, the proportion of the dietary fiber being at least 5 % by weight of the dry matter of the fat replacement ingredient and the proportion of the starch being at least 50% of the fat replacement ingredient dry matter. By this process a meat product having a high nutritional value but with a fat content as low as 2-13% by weight is produced, maintaining the same content of meat protein.

Dietary fiber is defined as the remnant part of the edible part of plants, and analogous to carbohydrates are resistant to digestion and absorption by the human small intestine. It is known that the intake of fiber reduces the risk of colon cancer, obesity cardiovascular diseases and several other disorders. Thus an increase in the daily intake of dietary fiber has been recommended.

The dietary fiber material is mainly originating from the cell walls in vegetables, whereof the insoluble fibers are hemicelluloses/celluloses and the soluble ones are called pectins. Pectins consist mainly of galacturonic acid and galacturonic acid methyl ester units. They are commercially produced from citrus peels and apple pomace and are classified according to their degree of esterification. Native pectins are very often highly methylated (HM pectins) and pectins of lower ester content (LM pectins) can be prepared. LM pectins are generally obtained by controlled acid de-esterification, but other means exist such as the use of acidic microbial pectin methyl esterases (PME) or alkaline PMEs from higher plants. The action of the enzyme pectin methyl esterase (PME) can be found in many fruits and vegetables where it demethylates or deesterifies the carboxymethyl groups of pectic polysaccharide chains. This decrease in the degree of methylation may in turn trigger different processes related to texture and firmness of the fruit or vegetable.

Pectins, such as LM ester and HM ester pectins, have been used as thickeners, emulsifiers, stabilizers and gelling agents in a variety of food products. US-6 528 085 provides a use of a pectin composition (the pectin being extracted from citrus peel) to prepare an aqueous composition having high yield stress characteristics without substantial gelation. The pectin is isolated from the citrus peel, mixed with one or more suitable food ingredients, such as any one or more salts, a protein an acid, a sugar, fruit or enzymes. The invention can be used in the preparation of pharmaceutical products, foodstuffs and non-food products.

Commercially available pectins, tailor-made to act as fat replacements with their own characteristics have a potential use in low-fat food products. It is generally recommended for use with water binding agents to improve sensory characteristics in low-fat foods. WO 0040098, for example, describes a pectin composition which is used as fat replacer and emulsifier in the preparation of jams or fruit systems for yoghurt or for the stabilization of acidified milk suspensions. The pectins are extracted from members of the plant family Chenopodiaceae (which includes beets, spinach and mangewurzels) using an acid solution of nitric acid, calcium is removed by an ion exchange and the pectins are precipitated by isopropyl alcohol. When pectins are used as fat replacement in processed meat products, a gel is sheared into small particles, which mimic the physical and organoleptic characteristics of the fat globules in emulsified fats.

The aim of this invention is to provide a process for the preparation of a vegetable fiber to be used as a fat replacement in a meat product, taking advantage of the health caring properties of the dietary fiber, as well as the use thereof in a meat product.

### SUMMARY OF THE INVENTION

It is the object of the present invention to provide a process for the preparation of vegetable fibers from cauliflower, broccoli, Brussels sprouts, green beans, green peas, turnip cabbage, nettles, spinach, tomato, cabbage, Swedish turnip, wild turnip, carrot, celeriac, black radish, beetroot, rose hip, apples and pears to be used as a fat replacement in a meat product, for example an emulsion sausage. This object is achieved by an appropriate treatment of a fresh raw vegetable in order to optimize the characteristics of the vegetable fibers in order to make them miscible with the meat in the processed meat product.

A second object of this invention is to provide a low-fat meat product comprising a vegetable fiber ingredient such that the final product retains a desirable texture and most importantly its water holding capacity, as well as retaining its texture.

In particular the invention relates to a modification of the pectin part of the fiber content to change the water holding capacity thereof.

The present invention is characterized in that vegetable fibers are heat treated for a relatively short period of time, thereby optimizing the PME activity to modify the esterification characteristics of pectin to enhance the interaction with the meat system, in particular the present invention relates to a process for the preparation of a fat replacement to be used in food compositions, in particular meat containing food compositions, comprising a step where a vegetable fiber is heat treated in order to de-activate pectin methylesterase, and prevent the de-esterification of pectins in the vegetable fiber maintaining the methoxyl pectins therein, having a degree of esterification of at least 50%.

A preferred embodiment of the invention relates to a process for the preparation of a fat replacement wherein the methoxyl pectins have a degree of esterification of at least 60%

A preferred embodiment of the invention relates to a process for the preparation of a fat replacement wherein the methoxyl pectins have a degree of esterification of at least 70%

A preferred embodiment of the invention relates to a process for the preparation of a fat replacement wherein the methoxyl pectins have a degree of esterification of at least 80%

A preferred embodiment of the invention relates to a heat treated vegetable fiber wherein the water content is at least 80% and at most 95%.

A preferred embodiment of the invention relates to vegetable products having a starch content of less than 25% by weight and of the group consisting of cauliflower, broccoli, Brussels sprouts, green beans, green peas, turnip cabbage, nettles, spinach, tomato, cabbage, Swedish turnip, wild turnip, carrot, celeriac, black radish, beetroot, rose hip, apples and pears.

A further preferred embodiment of the invention relates to vegetable products having starch content of less than 10% and of the group consisting of spinach, tomato, cabbage, wild turnip, carrot, celeriac, black radish, beet root, and rose hip.

A preferred embodiment of the invention relates to a fat replacement wherein the vegetable fiber is derived from cauliflower, broccoli, Brussels sprouts, green beans, green peas, turnip cabbage, nettles, spinach, tomato, cabbage, Swedish turnip, wild turnip, carrot, celeriac, black radish, beetroot, rose hip apples or pears.

A further preferred embodiment of the invention relates to a fat replacement wherein the vegetable fiber is derived from spinach, tomato, cabbage, wild turnip, carrot, celeriac, black radish, beetroot or rose hip.

A preferred embodiment of the invention relates to a fat replacement wherein the vegetable fiber raw material comprises at least 1.5%, preferably 2% dietary fibers.

A preferred embodiment of the invention relates to a fat replacement wherein the vegetable fiber raw material comprises at least 3.5%, preferably 4% and yet more preferably 5% by weight of mono- and disaccharides.

A further preferred embodiment of the invention relates to a low-fat meat product comprising a vegetable fiber ingredient, having a fat replacement where the weight ratio for the replacement of fat by vegetable fiber is 1:0.3-3, preferably 1:0.5-1.5 and yet more preferably 1:1 reducing the fat content in the final product to around 2-13 %.

A preferred embodiment of the invention relates to a low-fat meat product wherein the water/protein ratio is between 3.0 to 9.5.

A preferred embodiment of the invention relates to a low-fat meat product wherein the pectin content is at least 0.10% and at most 0.5 %.

### DETAILED DESCRIPTION OF THE INVENTION.

### Molecular interactions in meat

Meat is mostly the muscle tissue of an animal which is composed of roughly 75% water, 20% protein and 5% fat, carbohydrates and assorted proteins. The biochemical basis of muscles and their activities is related to the enzymatic and physical properties of actin, myosin and accessory proteins. Solubilized myosin molecules are long thin fibrous proteins with a molecular weight of about 500 kD. Each molecule is made up of six subunits, two large heavy chains and four smaller, light chains. The heavy chains contain a long linear C-terminal α-helical domain and a globular N-terminal domain. The two heavy chains are helically interwound, held together by bonds, giving the molecules a long, rigid superhelical structure with two globular headpieces. The four lighter globular proteins are associated with the globular headpieces. When the meat is heated, the bonds break and the proteins unwind leading to an expansion of globular proteins and a contraction of the fibrous proteins. Thus, the heat shrinks the muscle fibers and water is squeezed out. Due to the breaking of bonds in the natural structure, the protein molecules may unwind, recombine or coagulate forming a new structural assembly exposing new hydrogen- and possibly hydrophobic binding sites. During the production of emulsion sausages salt is added during the comminuting process in order to cause a swelling in muscle fibers and depolymerize and solubilize the myosin molecule from the fibrous structure. Myosin molecules extracted in such a way have the ability to form extremely strong gels upon heating, enhancing the water and fat holding capacity. On adding vegetable fibers to a meat product it is beneficial for the texture if the fibers interact with the extracted myosin in the meat product.

G', the storage modulus may be a measurement of the elasticity, which can be explained as the capacity to stock and go against an applied force and the ability to release it afterwards. In a myosin network, the G' measurements show the strength of the interactions between the molecules.

### The Water/Protein ratio (W/P) of meat products

The relative contents of fat, moisture and protein are very closely related in meat products. If the fat content is low, the water content is likely to be high, as more water per gram of protein is available. Thus, when producing meat products containing both water and fat, both the amount of fat and the moisture content have to be considered in relation to the protein content, a concept called the Water/Protein ratio (W/P). During cooking, water losses increase with increasing W/P, a higher W/P means more water per gram of protein, the myosin network is then weaker and is more prone to leak. In batters to be used for emulsion sausages the G' value is high when the W/P ratio is low and G' is low when the W/P ratio is high, indicating fewer interactions between extracted myosin molecules with increasing water content. During heating, a low W/P ratio facilitates the possible fusion of myosin molecules, since the density is high. On the contrary, when the W/P ratio is high, which is the case in low-fat emulsion sausages where some surplus fat has been removed, the number of possible interactions tends to be lower. Therefore cooked samples show a less elastic behavior with higher losses of water at high W/P indicating a weaker network with bigger pores and less capillary forces.

### Pectins and the action of pectin methyl esterase (PME)

The main constituent of the fiber material comes from the cell walls in the plant material whereof the insoluble fibers are hemicelluloses/celluloses and the soluble ones are pectins. Pectic polysaccharides are complex polysaccharides, where the backbone is almost exclusively made up from galacturonic acid residues. This backbone is interrupted by hairy regions in which the neutral sugars are concentrated. The galacturonic acid residues, depending on the pH, can be esterified at the carboxylic ends which will lead to a loss of their negative charges. The degree of esterification (DE) is therefore an important property of the pectin and so called high methoxyl (HM) pectin has a typical DE of 55-80%, whereas low methoxyl (LM) pectins have a DE< 50%.

In the table below the contents of water, total carbohydrates, starch, mono- and disaccharides, dietary fiber and starch calculated on dry matter is given for a number of vegetables including some fruits.

| Vegetable Contents calculated on 100 g edible part | Water content (%) | Total Carbohydrates (%) | Starch (%) | Mono and disaccharides (%) | Dietary fibers (%) | Starch (calculated on dry matter) (%) |
|---|---|---|---|---|---|---|
| Cauliflower | 91.3 | 6.2 | 1.1 | 2.7 | 2.4 | 12.6 |
| Broad beans | 81 | 11.7 | 5.8 | 1.7 | 4.2 | 30.5 |
| Broccoli | 89.1 | 6.2 | 1.2 | 1.9 | 3.1 | 11 |
| Brussels sprouts | 86 | 9 | 2.2 | 2.6 | 4.2 | 15.7 |
| Green beans | 90 | 7.1 | 1.5 | 1.7 | 3.9 | 15 |
| Yellow peas, dry | 15 | 60 | 47.2 | 2.1 | 10.7 | 55.5 |
| Green peas | 79 | 14.5 | 5 | 4 | 5.5 | 23.8 |
| Kale | 85 | 10 | 4.1 | 2.1 | 3.8 | 27.3 |
| Chickpeas | 10.7 | 61 | 46.4 | 4.6 | 10 | 52 |
| Turnip cabbage | 91 | 6.2 | 1.5 | 2.9 | 1.8 | 16.7 |
| Lentils, dry | 12 | 60 | 46.1 | 2.4 | 11.5 | 52.4 |
| Corncob | 68.8 | 25 | 18.8 | 3.3 | 2.9 | 60.3 |
| Nettles | 83 | 7.3 | 1.9 | 1.3 | 4.1 | 11.2 |
| Pumpkin | 92 | 6.5 | 2.1 | 2.7 | 1.7 | 26.3 |
| Red beans, dry | 10.8 | 62 | 43.4 | 4.6 | 14 | 48.7 |
| Spinach | 94 | 1.9 | 0.3 | 0.3 | 1.3 | 5 |
| Tomato | 93.4 | 5.1 | 0.7 | 3 | 1.4 | 10.6 |
| Cabbage | 92 | 6 | 0.6 | 3.4 | 2 | 7.5 |
| Jerusalem artichoke | 78 | 17.4 | 9.7 | 3.2 | 4.5 | 44.1 |
| Swedish turnip | 89.4 | 9.1 | 1.3 | 5.1 | 2.7 | 12.3 |
| Wild turnip | 90 | 6.6 | 0.8 | 3.9 | 1.9 | 8.0 |
| Carrot | 87.5 | 11.1 | 0.9 | 7.8 | 2.4 | 7.2 |
| Parsnip | 81 | 14.7 | 6.4 | 3.8 | 4.5 | 33.7 |
| Celeriac | 89 | 7.7 | 1 | 3.6 | 3.1 | 9.1 |
| Black radish | 94 | 3.9 | 0.1 | 2.2 | 1.6 | 1.7 |
| Beetroot | 87.1 | 10.8 | 1.5 | 7 | 2.3 | 11.6 |
| Black salsify | 79 | 16.3 | 9.3 | 3 | 4 | 44.3 |
| Potato | 79.6 | 17.5 | 14.6 | 1.5 | 1.4 | 71.6 |
| Orange | 86 | 12.2 | 1.4 | 8.9 | 1.9 | 10 |
| Rose hip w/o seeds, dry | 9.1 | 80 | 7 | 61 | 12 | 7.7 |
| Pear | 84.5 | 14.9 | 2.5 | 8.5 | 3.9 | 16.1 |
| Apple w/o peels | 84 | 14.8 | 3.4 | 10.5 | 0.9 | 21.3 |
| Oatmeal | 10.2 | 72.3 | 61 | 1.3 | 10 | 67.9 |
| Oat bran | 8.1 | 63 | 41.8 | 3.2 | 18 | 45.5 |
| Barley meal | 10.2 | 72 | 63.5 | 0.9 | 7.6 | 70.7 |
| Rye meal | 14 | 74 | 58 | 2.4 | 13.6 | 67.4 |
| Wheat meal | 14 | 72 | 66 | 0.5 | 5.5 | 76.7 |
| Unpolished (rough, brown) rice | 11.8 | 77 | 72.8 | 1.3 | 2.9 | 82.5 |

As discussed above, the degree of esterification (DE) is an important property of pectins. The only difference between HM pectin and LM pectin is in their relative proportions of acid and ester groups and this is the difference that-causes them to gel under completely different conditions. Native pectins are very often highly methylated (HM pectins) and pectins of lower ester content (LM pectins) can be obtained by controlled acid deesterification, but other means exist such as the use of acidic microbial pectin methyl esterases (PME) or alkaline PMEs from higher plants. LM pectins are able to strongly react with Calcium ions and in defined conditions to form gels for food applications.

The action of the enzyme pectin methyl esterase (PME) can be found in many fruits and vegetables where it demethylates or deesterifies the carboxymethyl groups of pectic polysaccharide chains. This decrease in the degree of methylation may in turn trigger different processes related to texture and firmness. These processes may comprise crosslinking by calcium, increasing the hydration at the demethylated sites, enhancing shielding and repulsion forces by the electric charges within the biopolymer matrix of the cell wall as well as decreasing the susceptibility to heat induced β-degradation of pectins and in increasing the susceptibility to polygalacturonase (PG) induced depolymerisation.

The aim of blanching fruits and vegetables prior to sterilization is, among others, the activation and/or inactivation of enzymes present in the plant tissue. The apparent activity of different enzymes at different temperatures exhibits a well-known behavior, and eventually a maximum activity is reached. This is often referred to as the optimal temperature for enzymatic action. PME activity during blanching and processing increases the firmness of the final product, whereas if no treatment is applied PME doesn't seem to affect the firmness. In this invention the PME activity is optimized to modify the esterification characteristics of pectin to enhance the interaction with the meat system.

By means of the present invention the objects are obtained and will be illustrated by the examples that follow. The invention will be described in relation to carrots, however, without being restricted thereto.

### Example 1

### The influence of purified HM- LM- and Ca²+LM pectins in a model emulsion sausage batter

This example demonstrates the interaction between pectin and the myosin network in a model emulsion sausage batter. Fresh boneless pork cutlet is trimmed to provide very lean meat. The lean meat was ground through a 12 mm plate, and then through a 3 mm plate in a meat mincer. The protein, water and fat contents are respectively 20%, 80% and 0%. Three different W/P ratios were investigated; W/P 5, 6.5 and 8.

Pectins were provided by Danisco Copenhagen. Two different types of pectins were used: LM pectin with a degree of esterification of 34% (G pectin LC1900) and HM pectin with a DE of 68% (G pectin 1400) determined by total acidity titration. Pectins solution/gels were produced by dilution of an appropriate amount of pectin powder in hot nearly boiling water under high speed magnetic stirring and let to solubilize for 2 hours until no visible particles could be seen. Appropriate amounts of ground meat, salt, water, pectin solution (12 mg pectin/ml) and calcium chloride salt were mixed together in an omnimixer at speed'9' for one minute.

During cooking, water losses increase with increasing W/P. The W/P ratio after cooking is an indication of the water holding capacity (WHC), the higher W/P ratio the better WHC. At the lowest W/P 5 there are only minor changes in the meat network WHC after the addition of HM- or LM pectins, while the addition of LM pectin + Ca²⁺ seems to increase the WHC slightly. At the W/P ratios 6.5 and 8 the addition of HM- and LM pectin + Ca²⁺ gives no change in the meat network WHC while the addition of LM pectin seems to lower the WHC. The storage modulus G' was the highest at the lowest W/P ratio. Also the addition of pectins at this low W/P ratio gave an increase in G'. At the higher W/P ratios of 6.5 and 8 the addition of pectins gave only marginal increases in the G,' although the addition of HM pectin increased the G' value slightly more than the LM- or LM pectins + Ca²⁺ indicating that HM pectins have a better tendency to interact with the meat network at the relevant W/P of 8 for emulsion sausages.

### Example 2

### The preparation of meat products comprising carrot fibers treated to control PME activity

The following example demonstrates a pre-treatment process for the carrot raw material to obtain pectin within the vegetable fiber for use in emulsion sausages. Raw carrots are cleaned in tap water, sliced in 10 mm thick slices. The slices undergo blanching with a volume loading ratio of 1 part carrot in 4 parts of water. The blanching times and temperatures were the following: 15 min at 40 °C, 25 min at 40 °C, 15 min at 60 °C and 25 min at 60 °C. Raw carrots were used as a control for comparison throughout the procedure.

The water content of the carrots increase with increasing blanching time and temperature, giving a swelling of the carrots, indicating that the cell walls are destabilized due to the action of PME or the action of heat on heat labile bonds between pectin molecules in the cell wall. The deesterification of pectin in treated carrots can be followed in either of two ways. The pH of the blanching solution gives an indication of the buffer capacity of the carrots. A low pH indicates a greater amount of charges and a lower degree of esterification of the pectin. The total acidity titration is an acid / base method that measures the amount of negative charges in the tested solution. The action of PME can be followed by correlating the volume of base with the deesterification of pectin present in the treated carrots.

The pH measurements and the titration results show that the carrots blanched for 15 minutes at 40 °C have a degree of esterification of the pectin similar to HM pectin while carrots treated at 60 °C for 15 minutes have pectins more like the LM pectin. The results also show that at the higher temperature of 60 °C and longer blanching times than 15 minutes, PME starts to become inactivated. Thus, in order to control the PME activity and the deesterification process, it is of utter most importance to regulate the temperatures and times for blanching.

Blanched carrot dices are then ground in a mixer (particle sizes are about 1-2 mm) and the obtained purée is mixed with water. The diluted purée is then mixed again to make it even more homogenous. Ground meat, salt, water and carrot solution are mixed together in an omnimixer at speed "9" for 1 min. The batter is put in a cooking tin and heated in a water bath at 75 °C to an internal temperature of 72 °C.

After the cooking procedure the results show that raw carrots or carrots blanched at 60 °C give rise to higher water losses in the batter than the one with carrots treated at 40 °C. Raw carrots and 60 °C / 25 min treated carrots have the same losses, 60 °C / 15 min treated carrots have less losses but still more important than the low temperature treated carrots. The G' measurements show that compared to the raw carrot control the elasticity is enhanced for 40 °C / 15 min treated carrots. Thus, carrots treated at 40 °C seem to have a beneficial influence on the losses of water compared to the other treatments, indicating that the water in blanched carrots is strongly bound or entrapped in the cellular structure of the carrot. This suggests that HM pectins improve the texture and WHC of the meat system.

Another beneficial consequence in using 40 °C treated carrots in the low-fat sausage products was the color of the cooked product, where a pink color could be observed. This was not seen for the products prepared with raw carrots or for 60 °C treated carrots. Also the taste was improved in that the mixture of the sugars from the carrots and the amino acids and small peptides from the meat forms a Maillard reaction upon heating which gives the meat product a palatable taste. Moreover, when frying slices of the sausage, a frying crust is easily formed and will not adhere to the pan as often happens with starch containing meat products. An additional positive effect in using carrot fibers in meat products is that carrots contain tocopherols, vitamin C and β-carotenes, which in their biological milieu associated with other redox systems, can act as anti-oxidants.

### Example 3

### An optimized preparation of meat products comprising carrot fibers treated to control PME activity

From examples 1 and 2 it can be concluded that.the higher the degree of pectin esterification, the better the vegetable fiber fits with the meat system. In example 2, the high degree of pectin esterification, was obtained at the lowest temperature (40 °C) and the shortest times (15 min) when the activity of the PME was the lowest. Another possible way to lower the PEM activity in order to obtain HM pectins is to use heat treatments at much higher temperatures for shorter times. Carrot cubes (10*10*10 mm) were heat treated at 92-94 °C for 6 minutes and 45 s.

The following procedure demonstrates the optimized pre-treatment process for the carrot raw material to obtain the most favorable esterified pectin and maximal swelling for the vegetable fibers for use in meat products. Raw carrots are cleaned in tap water, diced in 10 x 10 x 10 mm cubes. The blanching times and temperatures were the following: One batch at 92-94 °C for 6 min and a second batch at 90 °C for 45 seconds. Blanched and frozen carrot cubes are ground once in a mincer through a 3 mm grinder.

To show the applicability of the vegetable fat replacement in another meat product such as a beef burger the two differently heat treated carrots were added to a beef burger. Two types of meat raw material were chosen to give a fat content of the beef burgers varying from 3.6 to 34.6%. Either 10 or 20% water or the grinded carrot cubes heat treated at 92-94 °C for 6 min. or 45 s was added to the different meat raw material. Patties 100 mm in diameter, 10 mm thick having a weight of 92 g were formed. These patties were fried in a frying pan at 175 °C to a center temperature of 72 °C (3.5 min. on each side).

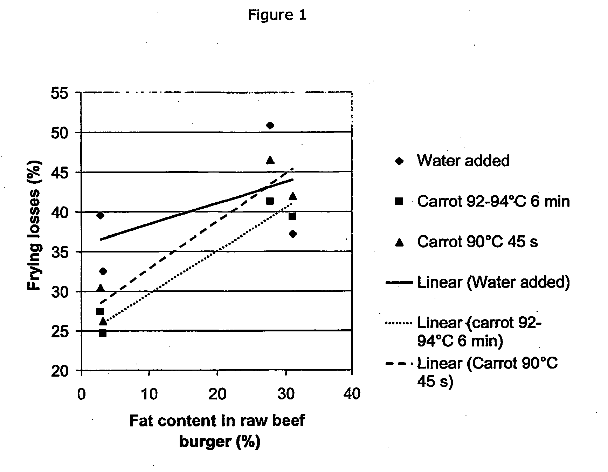

The results from the analysis of the hamburgers after the cooking procedure show that the overall loss (total loss of fat and water) during cooking is greater in the high-fat hamburgers, which is probably due to the higher proportion of fat loss from the high-fat containing hamburgers. However, when the loss of water from cooked hamburgers were compared to the water content present in the raw hamburgers, lt can be seen that the hamburgers containing carrots blanched at 93 °C for 6 min have a lesser water loss compared to hamburgers containing carrots treated at 93 °C for only 45 s (se Figure 1). The hamburgers with carrots treated at 93 °C for 6 min have a better WHC than carrots without treated carrots.

The effect of the PME activity in blanched carrots on the frying losses of hamburger patties can then be analyzed. It is clearly seen that a high PME activity causing a de-esterification of the pectins in the carrots, results in higher losses for the hamburgers. The longer treatment most probably inactivated PME more efficiently than in the shorter treatment and therefore will result in higher amounts of HM pectins. It can thus be concluded that the PME activity should be decreased to a minimum in order to obtain hamburgers with low frying losses.

### Example 4

### Taste evaluation

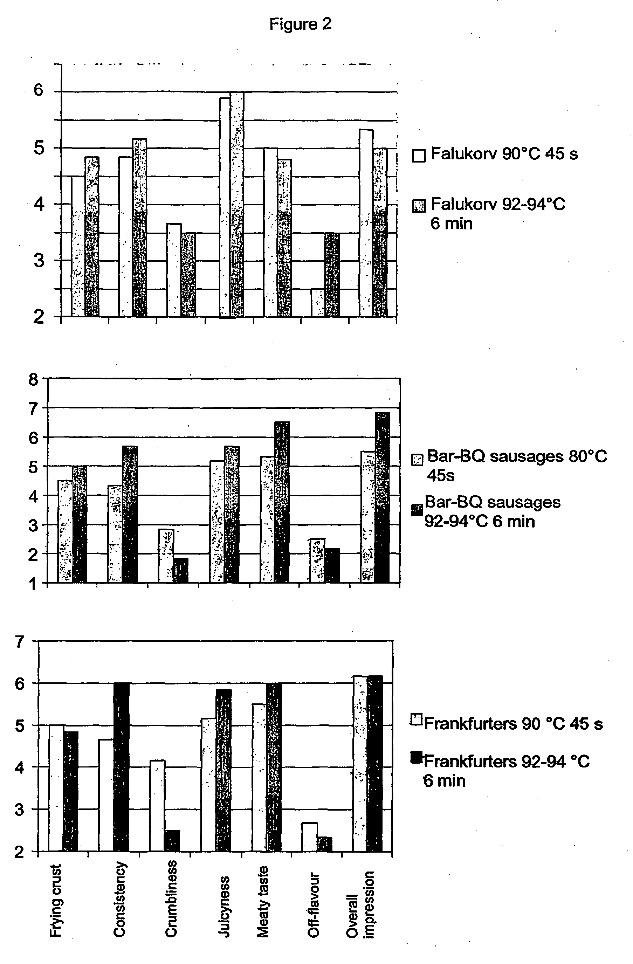

A variety of sausages; Falukorv, Frankfurters and Bar-BQ sausages, comprising carrots treated according to the procedure described in example 3, and a treatment procedure wherein the carrots were heat treated to 80 °C 45 s and cooked as described in example 2, were tested by a taste panel comparing the following parameters; frying crust, consistency, crumbliness, juiciness, meaty taste, off-flavor and overall impression, on a scale from 1 to 9, 9 being the highest score (Figure 2). For all parameters and sausages tested by the panel, the sausages with carrots treated at 93 °C for 6 min received either a comparable or a better score than that received by the sausages containing carrots treated either at 80 or 90 °C for 45 s.

### Conclusion

From the examples above it can be elucidated that in order to obtain the most favorable interaction of the vegetable fibers with the meat, the optimal blanching treatment of the vegetable fibers is when the water content of the fibers is increased to an optimal swelling, while at the same time the degree of esterification for the pectins is kept as high as possible. This can be achieved in several different ways. In Example 2 a blanching treatment at the relatively low temperature of 40 °C during 15 minutes gave sausages with less water losses compared to sausages treated at 60° during 15 min or 25 min. In raw carrots all pectins present are HM-pectins, and PME is fully functional but exists in an inactive state. At the lower treatment temperature of 40 °C and 15 minutes PME has not been activated and therefore the majority of the pectins are still in the form of HM-pectins, but the swelling process of the carrots has started in comparison to the raw carrots. At the higher temperatures of 60°C and 15 or 25 minutes the PME activity is higher than at 40°C, 60% activity is left after 15 min, whereas at longer times at 65°C PME seems to be inactivated and no activity is observed after 60 min of blanching at 65°C (data not shown). However, at these longer blanching times the carrots have swelled from a water content of 87 % to 92 %, which probably make them too mushy as an additive in sausages and unable to retain water during the cooking procedure. This can be seen in Example 2, where water losses also are greater from the carrots treated during longer time periods.

Another way to achieve optimal swelling while maintaining the proportion of HM-pectins as high as possible is to blanch the carrots at higher temperatures for shorter periods of times as can be seen in Example 3. A blanching treatment at the high temperature of 90 °C for 2 to 10 minutes decreases the PME activity to about 5 % (data not shown) while maintaining the pectins as HM-pectins. At these short treatment times the carrots have started the swelling process but have not yet become too mushy. If the carrots are treated for 25 minutes at the higher temperature, again the carrots become too mushy and start to loose their water holding capacity during the cooking procedure (data not shown).

The advantage of using the high temperature and short treatment compared to the blanching treatment at 40°C and 15 minutes is that at the higher temperature the PME is activated followed by an immediate and almost total inactivation. In the lower temperature treatment at 40°C, the PME is not activated but can continue to de-esterify the pectins during the cooking procedure of the sausages. This de-esterification process could be prevented by increasing the blanching time, but this would however cause the carrots to swell too much and loose their firmness, thus lowering the water holding capacity of the sausages.

It seems that the PME activity is dependent on both the temperature and the blanching time. After the PME has been activated, the temperature needed to inactivate PME is a function of time. At high temperatures only a few minutes are needed to almost totally inactivate PME. As the blanching temperature decreases the treatment time has to increase considerably in order to reach a complete inactivation of PME. The swelling, however, seems mostly to be a function of time. At all temperatures tested, the shorter treatment times cause a swelling of the carrot making them firm enough, that upon addition to the sausage batter, results in sausages with good water holding capacity. When the blanching times are too long the carrots become mushy and consequently, unfit to contribute to the water holding capacity of the sausages.

## Claims

1. A process for the preparation of a fat replacement to be used in food compositions, in particular meat containing food compositions, comprising a step where a vegetable fiber is heat treated in order to de-activate pectin methylesterase, and prevent the de-esterification of pectins in the vegetable fiber maintaining the methoxyl pectins therein, having a degree of esterification of at least 50%.

2. A process for the preparation of a fat replacement according to claim 1, wherein the methoxyl pectins have a degree of esterification of at least 60%

3. A process for the preparation of a fat replacement according to claim 1, wherein the methoxyl pectins have a degree of esterification of at least 70%

4. A process for the preparation of a fat replacement according to claim 1, wherein the methoxyl pectins have a degree of esterification of at least 80%

5. A process according to claims 1-4, wherein the temperature is 40-95°C and the time for treatment is 1-60 min.

6. A process according to claims 1-4 wherein the temperature is 60-95°C and the time for treatment is 1-15 min.

7. A process according to claims 1-4 wherein the temperature is 80-95°C and the time for treatment is 1-10 min.

8. A fat replacement comprising heat treated vegetable fiber prepared in accordance with claims 1-7, wherein the vegetable fiber is derived from cauliflower, broccoli, Brussels sprouts, green beans, green peas, turnip, cabbage, nettles, spinach, tomato, cabbage, Swedish turnip, wild turnip, carrot, celeriac, black radish, beetroot, rose hip, apples or pears.

9. A fat replacement according to claim 8, wherein the vegetable fiber is derived from spinach, tomato, cabbage, wild turnip, carrot, celeriac, black radish, beetroot or rose hip.

10. A fat replacement according to claims 8-9, wherein the starch content is at most 25% by weight calculated on dry matter.

11. A fat replacement according to claims 8-9, wherein the starch content is at most 10% by weight calculated on dry matter.

12. A fat replacement according to claims 8-9, wherein the water content is at least 80% and at most 95%.

13. A fat replacement according to claims 8-9, wherein the vegetable fiber raw material comprises at least 1.5% dietary fibers.

14. A fat replacement according to claims 8-9, wherein the vegetable fiber raw material comprises at least 2% dietary fibers.

15. A fat replacement according to claims 8-9, wherein the vegetable fiber raw material comprises at least 3.5% by weight of mono- and disaccharides.

16. A fat replacement according to claims 8-9, wherein the vegetable fiber raw material comprises at least 4% by weight of mono- and disaccharides.

17. A fat replacement according to claims 8-9, wherein the vegetable fiber raw material comprises at least 5% by weight of mono- and disaccharides.

18. Use of the vegetable fiber ingredient, prepared in accordance with claims 1-7, as a fat replacement in a low-fat meat product wherein the weight ratio for the replacement of fat by vegetable fiber is 1:0.5-1.5 reducing the fat content in the final product to around 2-13%.

19. Use of the vegetable fiber ingredient, prepared in accordance with claims 1-7, as a fat replacement in a low-fat meat product wherein the weight ratio for the replacement of fat by vegetable fiber is 1:1 reducing the fat content in the final product to around 2-13%.

20. Use of the vegetable fiber ingredient, prepared in accordance with claims 1-7, as a fat replacement in a low-fat meat product wherein the water/protein ratio in said low-fat meat product is between 3.0 to 9.5.

21. Use of the vegetable fiber ingredient, prepared in accordance with claims 1-7, as a fat replacement in a low-fat meat product wherein the pectin content in said low-fat meat product is at least 0.10% and at most 0.5%.

## Patentansprüche

1. Ein Verfahren zur Herstellung eines Fettersatzes zur Verwendung in Lebensmittelzusammensetzungen, insbesondere fleischhaltigen Lebensmittelzusammensetzungen, umfassend einen Schritt, bei welchem eine pflanzliche Faser hitzebehandelt wird, um die Pektinmethylesterase zu deaktivieren, die Verseifung des Pektins in der pflanzlichen Faser zu verhindern, um das Methoxylpektin darin zu erhalten, welches einen Veresterungsgrad von wenigstens 50 % hat.

2. Ein Verfahren zur Herstellung eines Fettersatzes gemäß Anspruch 1, wobei die Methoxylpektine einen Veresterungsgrad von wenigstens 60 % haben.

3. Ein Verfahren zur Herstellung eines Fettersatzes gemäß Anspruch 1, wobei die Methoxylpektine einen Veresterungsgrad von wenigstens 70 % haben.

4. Ein Verfahren zur Herstellung eines Fettersatzes gemäß Anspruch 1, wobei die Methoxylpektine einen Veresterungsgrad von wenigstens 80 % haben.

5. Ein Verfahren gemäß der Ansprüche 1 bis 4, wobei die Temperatur 40 - 95°C ist und die Zeit für die Behandlung 1 - 60 Minuten beträgt.

6. Ein Verfahren gemäß der Ansprüche 1 bis 4, wobei die Temperatur 60 - 95°C ist und die Zeit für die Behandlung 1 - 15 Minuten beträgt.

7. Ein Verfahren gemäß der Ansprüche 1 bis 4, wobei die Temperatur 80 - 95°C ist und die Zeit für die Behandlung 1 - 10 Minuten beträgt.

8. Ein Fettersatz enthaltend hitzebehandelnde pflanzliche Fasern, die entsprechend der Ansprüche 1 bis 7 hergestellt sind, wobei die pflanzliche Faser aus Blumenkohl, Brokkoli, Rosenkohl, Grünen Bohnen, Grünen Erbsen, Weißrübe, Kraut, Nesseln, Spinat, Tomaten, Kohl, Kohlrübe, Raps, Karotte, Sellerie, Schwarzer Rettich, Rote Beete, Rosenblüten, Äpfeln oder Birnen stammt.

9. Ein Fettersatz gemäß Anspruch 8, wobei die pflanzliche Faser aus Spinat, Tomaten, Kohl, Raps, Karotte, Sellerie, Schwarzer Rettich, Rote Beete oder Rosenblüten stammt.

10. Ein Fettersatz gemäß den Ansprüchen 8 bis 9, wobei der Stärkegehalt maximal 25 % des Gewichtes bezogen auf die Trockenmasse ist.

11. Ein Fettersatz gemäß den Ansprüchen 8 bis 9, wobei der Stärkegehalt maximal 10 % des Gewichtes bezogen auf die Trockenmasse ist.

12. Ein Fettersatz gemäß den Ansprüchen 8 bis 9, wobei der Wassergehalt wenigstens 80 % und maximal 95 % ist.

13. Ein Fettersatz gemäß den Ansprüchen 8 bis 9, wobei das Rohmaterial der pflanzlichen Faser wenigstens 1,5 % Ballaststoffe enthält.

14. Ein Fettersatz gemäß den Ansprüchen 8 bis 9, wobei das Rohmaterial der pflanzlichen Faser wenigstens 2 % Ballaststoffe enthält.

15. Ein Fettersatz gemäß den Ansprüchen 8 bis 9, wobei das Rohmaterial der pflanzlichen Faser zu wenigstens 3,5 % des Gewichtes aus Mono- und Disacchariden besteht.

16. Ein Fettersatz gemäß den Ansprüchen 8 bis 9, wobei das Rohmaterial der pflanzlichen Faser zu wenigstens 4 % des Gewichtes aus Mono- und Disacchariden besteht.

17. Ein Fettersatz gemäß den Ansprüchen 8 bis 9, wobei das Rohmaterial der pflanzlichen Faser zu wenigstens 5 % des Gewichtes aus Mono- und Disacchariden besteht.

18. Verwendung der pflanzlichen Faserzusätze, die gemäß der Ansprüche 1 bis 7 hergestellt sind, als Fettersatz in Fleischprodukten mit niedrigem Fettanteil, wobei das Gewichtsverhältnis für den Ersatzstoff des Fettes durch pflanzliche Fasern 1:0,5 - 1,5 ist, wodurch der Fettgehalt im Endprodukt auf rund 2 bis 13 % reduziert wird.

19. Verwendung der pflanzlichen Faserzusätze, die gemäß der Ansprüche 1 bis 7 hergestellt sind, als Fettersatz in Fleischprodukten mit niedrigem Fettanteil, wobei das Gewichtsverhältnis für den Ersatzstoff des Fettes durch pflanzliche Fasern 1:1 ist, wodurch der Fettgehalt im Endprodukt auf rund 2 bis 13 % reduziert wird.

20. Verwendung der pflanzlichen Faserzusätze, die gemäß der Ansprüche 1 bis 7 hergestellt sind, als Fettersatz in Fleischprodukten mit niedrigem Fettanteil, wobei das Wasser/ Proteinverhältnis in besagten Niedrigfettfleischprodukten zwischen 3,0 bis 9,5 ist.

21. Verwendung der pflanzlichen Faserzusätze, die gemäß der Ansprüche 1 bis 7 hergestellt sind, als Fettersatz in Fleischprodukten mit niedrigem Fettgehalt, wobei der Pektinanteil in besagten Niedrigfettfleischprodukten wenigstens 0,10 % und maximal 0,5 % ist.

## Revendications

1. Procédé pour la préparation d'un produit de remplacement de matières grasses à utiliser dans des compositions alimentaires, en particulier les compositions alimentaires contenant de la viande, comprenant une étape dans laquelle une fibre végétale est traitée thermiquement pour désactiver la méthylestérase de pectine et empêcher la désestérification des pectines dans la fibre végétale, maintenant ainsi les pectines méthoxyle dans celles-ci, avec un degré d'estérification d'au moins 50 %.

2. Procédé pour la préparation d'un produit de remplacement des matières grasses selon la revendication 1, dans lequel les pectines méthoxyle ont un degré d'estérification d'au moins 60 %.

3. Procédé pour la préparation d'un produit de remplacement des matières grasses selon la revendication 1, dans lequel les pectines méthoxyle ont un degré d'estérification d'au moins 70 %.

4. Procédé pour la préparation d'un produit de remplacement des matières grasses selon la revendication 1, dans lequel les pectines méthoxyle ont un degré d'estérification d'au moins 80 %.

5. Procédé selon les revendications 1-4, dans lequel la température est de 40-95°C et la durée de traitement est de 1-60 minutes.

6. Procédé selon les revendications 1-4, dans lequel la température est de 60-95°C et la durée de traitement est de 1-15 minutes.

7. Procédé selon les revendications 1-4, dans lequel la température est de 80-95°C et la durée de traitement est de 1-10 minutes.

8. Produit de remplacement de matière grasse comprenant une fibre végétale traitée thermiquement préparée selon les revendications 1-7, dans lequel la fibre végétale est dérivée du chou-fleur, du brocoli, du chou de Bruxelles, du haricot vert, du pois vert, du navet, du chou, de l'ortie, de l'épinard, de la tomate, du chou, du rutabaga, du navet sauvage, de la carotte, du céleri, du raifort, de la betterave, du cynorhodon, des pommes ou des poires.

9. Produit de remplacement des matières grasses selon la revendication 8, dans lequel la fibre végétale est dérivée de l'épinard, de la tomate, du chou, du navet sauvage, de la carotte, du céleri, du raifort, de la betterave ou du cynorhodon.

10. Produit de remplacement des matières grasses selon les revendications 8-9, dans lequel la teneur en amidon est au plus de 25 % en poids, calculée sur la matière sèche.

11. Produit de remplacement des matières grasses selon les revendications 8-9, dans lequel la teneur en amidon est au plus de 10 % en poids, calculée sur la matière sèche.

12. Produit de remplacement des matières grasses selon les revendications 8-9, dans lequel la teneur en eau est au moins de 80 % et au plus de 95 %.

13. Produit de remplacement des matières grasses selon les revendications 8-9, dans lequel la matière brute de la fibre végétale comprend au moins 1,5 % de fibres diététiques.

14. Produit de remplacement des matières grasses selon les revendications 8-9, dans lequel la matière brute de la fibre végétale comprend au moins 2 % de fibres diététiques.

15. Produit de remplacement des matières grasses selon les revendications 8-9, dans lequel la matière brute de la fibre végétale comprend au moins 3,5 % en poids de mono- et disaccharides.

16. Produit de remplacement des matières grasses selon les revendications 8-9, dans lequel la matière brute de la fibre végétale comprend au moins 4 % en poids de mono- et disaccharides.

17. Produit de remplacement des matières grasses selon les revendications 8-9, dans lequel la matière brute de la fibre végétale comprend au moins 5 % en poids de mono- et disaccharides.

18. Utilisation de l'ingrédient de la fibre végétale, préparée selon les revendications 1-7, en tant que produit de remplacement des matières grasses dans un produit carné à faible teneur en matières grasses, dans lequel le rapport en poids pour le produit de remplacement des matières grasses par des fibres végétales est de 1:0,5-1,5, réduisant ainsi la teneur en matières grasses dans le produit final jusqu'à environ 2-13 %.

19. Utilisation de l'ingrédient de la fibre végétale, préparée selon les revendications 1-7, en tant que produit de remplacement des matières grasses dans un produit carné à faible teneur en matières grasses, dans lequel le rapport en poids pour le produit de remplacement de matières grasses par des fibres végétales est de 1:1, réduisant ainsi la teneur en matières grasses dans le produit final jusqu'à environ 2-13 %.

20. Utilisation de l'ingrédient de la fibre végétale, préparée selon les revendications 1-7, en tant que produit de remplacement des matières grasses dans un produit carné à faible teneur en matières grasses, dans lequel le rapport eau/protéine dans ledit produit carné à faible teneur en matières grasses se situe entre 3,0 0 jusqu'à 9,5.

21. Utilisation de l'ingrédient de la fibre végétale, préparée selon les revendications 1-7, en tant que produit de remplacement de matières grasses dans un produit carné à faible teneur en matières grasses, dans lequel la teneur en pectine dans ledit produit carné à faible teneur en matières grasses est au moins de 0,10 % et au plus de 0,5 %.
